# EUROPEAN PATENT APPLICATION

(11) **EP 4 737 018 A1**
(43) Date of publication of application: **06.05.2026**
(21) Application number: 25808436.7
(22) Date of filing: 20.05.2025
(51) Int. Cl.: B05C 5/02, H01M 4/04, B05C 11/10, G01B 11/06, G01B 3/22

(54) **DIE COATER AND SECONDARY BATTERY MANUFACTURING EQUIPMENT COMPRISING DIE COATER**

(30) Priority: 24.05.2024 KR 20240067893
(71) Applicant: LG Energy Solution, Ltd., Seoul 07335 (KR)
(72) Inventor: KIM, Man Hyeong, Daejeon 34122 (KR); KANG, Min Kyu, Daejeon 34122 (KR); JO, Young Joon, Daejeon 34122 (KR); SONG, Taek Yong, Daejeon 34122 (KR); MOON, Young Gyu, Daejeon 34122 (KR); LEE, Do Yeon, Daejeon 34122 (KR); KIM, Hyeon Seok, Daejeon 34122 (KR)
(74) Representative: Plasseraud IP
(86) International application number: PCT/KR2025/095332
(87) International publication number: WO 2025/244497

(57) **Abstract**

According to exemplary embodiments, a die coater is provided. The die coater includes: a first die including a manifold; a shim on the first die; a plurality of coating gap measuring devices coupled to the first die; and a second die coupled to the first die, wherein each of the plurality of coating gap measuring devices is configured to measure a distance from a lip, which is a slurry discharge part of the first die, the shim, and the second die, to a coating roll.

## Description

### [Technical Field]

The present disclosure relates to a die coater and a secondary battery manufacturing facility including a die coater.

This application claims the benefit of Korean Patent Application No. 10-2024-0067893, filed on May 24, 2024, the disclosure of which is incorporated herein by reference.

### [Background]

Unlike primary batteries, secondary batteries can be charged and discharged a plurality of times. Secondary batteries are widely used as energy sources for various wireless devices such as handsets, laptops, and cordless vacuum cleaners. Recently, due to improvements in energy density and economies of scale, the manufacturing cost per unit capacity of secondary batteries has decreased dramatically. As the range of battery electric vehicles (BEVs) has increased to levels comparable to fuel vehicles, the primary use of secondary batteries is shifting from mobile devices to mobility.

An electrode of a secondary battery is the most critical component in terms of energy density. Secondary battery electrodes can be formed through processes such as coating, roll pressing, drying, slitting, and notching. Among these, the coating process involves applying a coating material containing active material onto a current collector and can be performed using a die coater.

### [Summary]

### [Technical Problem]

The technical problem to be solved by the present disclosure is to provide a die coater with enhanced reliability and a secondary battery manufacturing facility including the die coater.

### [Technical Solution]

According to exemplary embodiments of the present disclosure for solving the above-mentioned problem, a die coater is provided. The die coater includes: a first die comprising a manifold; a shim on the first die; a plurality of coating gap measuring devices coupled to the first die; and a second die coupled to the first die, wherein each of the plurality of coating gap measuring devices is configured to measure a distance from a lip, which is a slurry discharge part of the first die, the shim, and the second die, to a coating roll.

The plurality of coating gap measuring devices are spaced apart from each other with the shim interposed between them.

Each of the plurality of coating gap measuring devices includes a dial gauge, and the dial gauge includes a bezel and a rod-shaped spindle connected to the bezel.

A thickness of the shim is smaller than a thickness of the spindle.

The first die coater includes a groove into which the spindle is inserted.

Each of the plurality of coating gap measuring devices includes a clamp for fixing the dial gauge to the first die.

The clamp is fixed to the first die, wherein the clamp includes a groove, wherein a stem of the dial gauge is inserted into the groove, and the stem is interposed between the bezel and the spindle.

The shim overlaps the clamp of each of the plurality of coating gap measuring devices in the extending direction of the spindle.

Each of the plurality of coating gap measuring devices further includes a tip connected to the spindle.

A width of the tip is different from a width of the spindle.

The width of the tip is smaller than the width of the spindle.

The width of the tip is greater than a thickness of the shim.

Each of the plurality of coating gap measuring devices includes a tip cover overlapping the tip in a first direction, which is the extending direction of the tip.

The tip cover includes a hole extending in the first direction.

Each of the plurality of coating gap measuring devices further includes a cover adjuster configured to adjust the position of the hole in the tip cover.

The second die includes a plurality of grooves overlapping with the plurality of coating gap measuring devices.

Each of the plurality of coating gap measuring devices includes a clamp for fixing a dial gauge to the first die, and each of the plurality of grooves includes a first portion overlapping the clamp.

Each of the plurality of grooves includes a second portion overlapping the spindle.

Each of the plurality of grooves includes a third portion overlapping the tip.
each of the plurality of grooves includes a fourth portion overlapping the tip cover.

### [Advantageous Effects]

According to exemplary embodiments of the present disclosure, a die coater including a plurality of coating gap measuring devices configured to measure the coating gap, which is the distance between the coating roll and the lip of the die coater, and a coating facility including the same may be provided. Accordingly, the distance of the coating gap can be accurately managed, and the reliability of secondary battery manufacturing can be enhanced.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 shows a secondary battery manufacturing facility according to the exemplary embodiments.
FIGS. 2 and 3 are perspective views illustrating a die coater according to the exemplary embodiments.
FIGS. 4 to 6 are exploded perspective views illustrating the die coater according to the exemplary embodiments.
FIG. 7 shows a portion of FIG. 4.
FIG. 8 shows a portion of FIG. 6.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

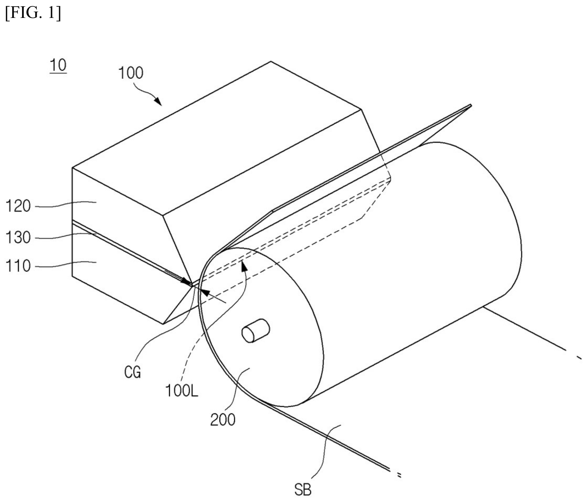

FIG. 1 illustrates a secondary battery manufacturing facility 10 according to exemplary embodiments.

According to the exemplary embodiments, the secondary battery manufacturing facility 10 may include a die coater 100 and a coating roll 200. The die coater 100 may be configured to discharge a coating material. The portion of the die coater 100 from which the coating material is discharged may be referred to as a lip 100L.

According to exemplary embodiments, the die coater 100 may be configured to apply coating material onto a current collector SB. The coating roll 200 and the lip 100L may face each other. The coating roll 200 and the lip 100L may overlap in the direction of discharge of the electrode slurry. The gap between the coating roll 200 and the lip 100L is defined as the coating gap CG. Depending on the coating gap CG, the distribution and/or shape (e.g., profile) of the coating layer on the current collector SB may vary. Accordingly, the coating gap CG is one of the key process parameters for the reliability of the coating process.

The coating material may include an electrode slurry. The electrode slurry can be used in the manufacture of electrodes for secondary batteries. The electrode slurry may include electrode active material, conductive material, binder, and solvent. The electrode slurry can be manufactured by dissolving the electrode active material, conductive material, binder, etc., in the solvent. The solvent can disperse the electrode active material, etc. The solvent may be an aqueous solvent or a non-aqueous solvent. The solvent may include any one of dimethyl sulfoxide (DMSO), isopropyl alcohol, N-methylpyrrolidone (NMP), acetone, water, and mixtures thereof. The amount of solvent used may be determined based on the target viscosity of the electrode slurry. Parameters for determining the amount of solvent used include the coating thickness of the electrode slurry, manufacturing yield, and workability.

The positive electrode active material is a substance capable of causing electrochemical reactions. The positive electrode active material may be a lithium transition metal oxide. The positive electrode active materials include, for example, any one among layered compounds such as lithium cobalt oxide (LiCoO₂) and lithium nickel oxide (LiNiO₂) substituted with one or more transition metals; lithium manganese oxide substituted with one or more transition metals; lithium nickel-based oxides expressed by the chemical formula LiNi_{1-y}M_{y}O₂ (where M is any one of Co, Mn, Al, Cu, Fe, Mg, B, Cr, Zn, and Ga, and 0.01≤y≤0.7); lithium-nickel-cobalt-manganese composite oxides expressed by the chemical formula Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, and M is one of Al, Mg, Cr, Ti, Si, and Y, and A is one of F, P, and Cl) such as Li_{1+z}Ni_{1/3}Co_{1/3}Mn_{1/3}O₂ and Li_{1+z}Ni_{0.4}Mn_{0.4}Co_{0.2}O₂; and Olivine-based lithium metal phosphates expressed by the chemical formula Li₁₊ₓM_{1-y}M'_{y}PO_{4-z}X_{z} (where M is a transition metal, more specifically one of Fe, Mn, Co, and Ni, M' is one of Al, Mg, and Ti, X is one of F, S, and N, -0.5≤x≤+0.5, 0≤y≤0.5, and 0≤z≤0.1).

The negative electrode active material may include carbon, such as non-graphitized carbon or graphite-based carbon. The negative electrode active material may include, for example, metal composite oxides such as LiₓFe₂O₃(0≤x≤1), LiₓWO₂(0≤x≤1), SnₓMe₁₋ₓMe'_{y}O_{z} (where Me is one of Mn, Fe, Pb, and Ge, and Me' is one of Al, B, P, Si, Group 1, 2, or 3 elements of the periodic table, and halogens; 0<x≤1; 1≤y≤3; and 1≤z≤8). The negative electrode active material may include, for example, any one of lithium metal; lithium alloys; silicon-based alloys; and tin-based alloys. The negative electrode active material may include, for example, metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅. The negative electrode active material may also include, for example, conductive polymers such as polyacetylene; Li-Co-Ni-based materials; and the like.

The conductive material can possess conductivity without inducing chemical changes in the secondary battery ultimately manufactured. Conductive materials may include, for example, graphite such as natural graphite or synthetic graphite; carbon black such as acetylene black, ketjen black, channel black, furnace black, lamp black, and thermal black; conductive fibers such as carbon fibers or metal fibers; powders such as carbon fluoride, aluminum, or nickel powder; conductive whiskers such as zinc oxide and potassium titanate; conductive metal oxides such as titanium oxide; and polyphenylene derivatives.

The binder can enhance the coupling between the active material and the conductive material, as well as the coupling strength to the current collector. Examples of binders include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorinated rubber, and various copolymers.

The thickness of the positive electrode current collector may be in the range of about 3 µm to about 500 µm. The positive electrode current collector may not cause chemical changes in the secondary battery ultimately manufactured and may have high conductivity. The positive electrode current collector may include, for example, any one of stainless steel, aluminum, nickel, titanium, baked carbon, and aluminum. The positive electrode current collector may also include stainless steel surface-treated with carbon, nickel, titanium, silver, or the like. The surface of the positive electrode current collector may include a micro-irregular structure to enhance the adhesion of the active material. The shape of the positive electrode current collector may include any one of a film, sheet, foil, net, porous material, foam, and nonwoven fabric.

The thickness of the negative electrode current collector may be in the range of about 3 µm to about 500 µm. The negative electrode current collector may not induce chemical changes in the secondary battery ultimately manufactured and may possess high conductivity. The negative electrode current collector may include any one of copper, stainless steel, aluminum, nickel, titanium, graphite, and aluminum-cadmium alloy. The negative electrode current collector may also include stainless steel surface-treated with carbon, nickel, titanium, silver, etc. The surface of the negative electrode current collector may include a micro-irregular structure to enhance the adhesion of the active material. The shape of the negative electrode current collector may include any one of film, sheet, foil, net, porous material, foam, and nonwoven fabric.

### (Second embodiment)

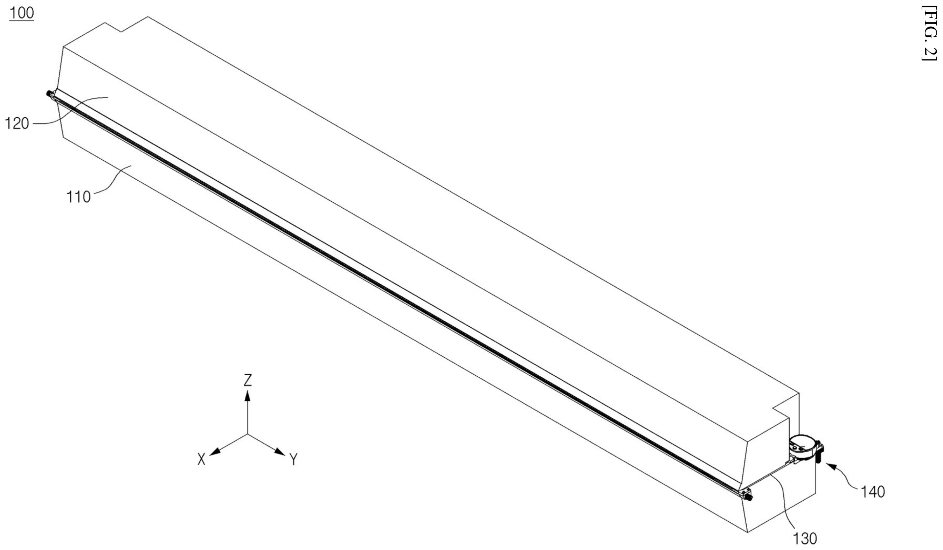

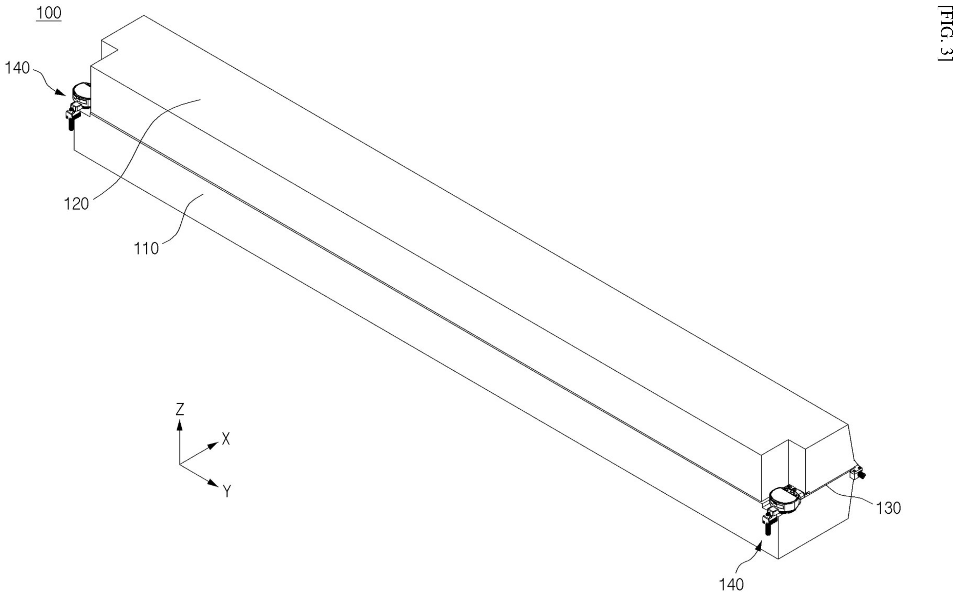

FIGS. 2 and 3 are perspective views illustrating the die coater 100 according to exemplary embodiments. FIGS. 2 and 3 show the die coater 100 as viewed from different directions.

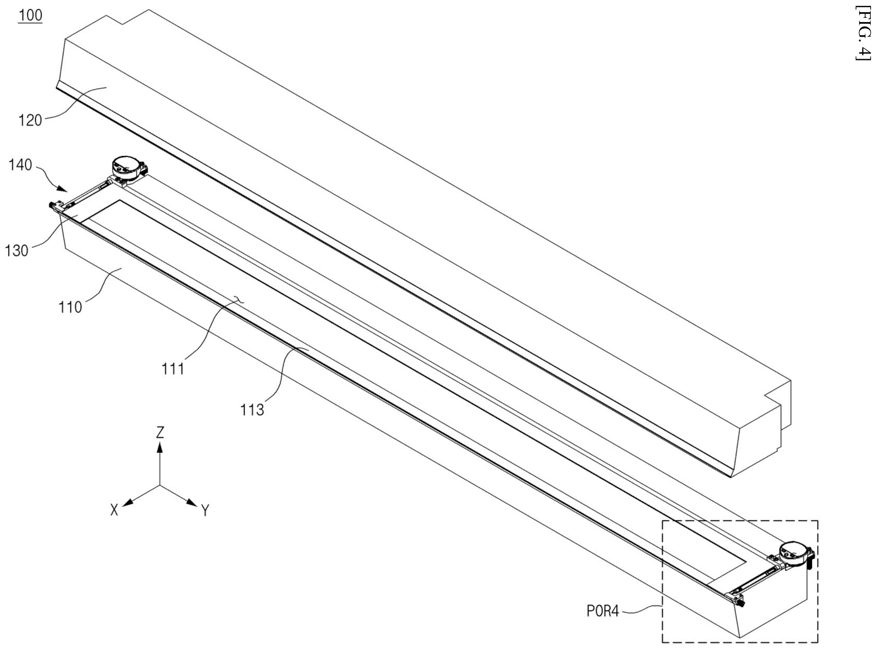

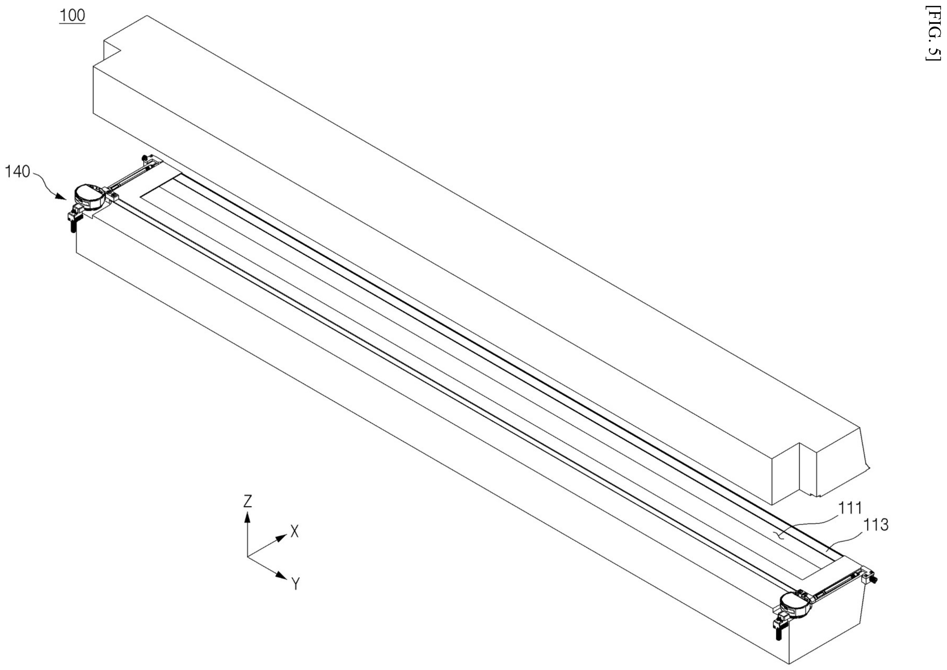

FIGS. 4 through 6 are exploded perspective views illustrating the die coater 100 according to exemplary embodiments. FIGS. 4 through 6 show exploded perspective views of the die coater 100 viewed from different directions.

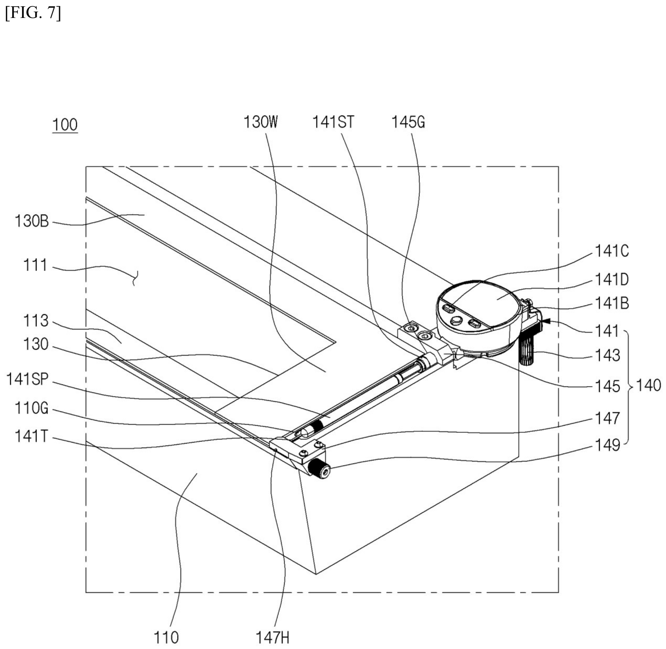

FIG. 7 shows a portion POR4 of FIG. 4.

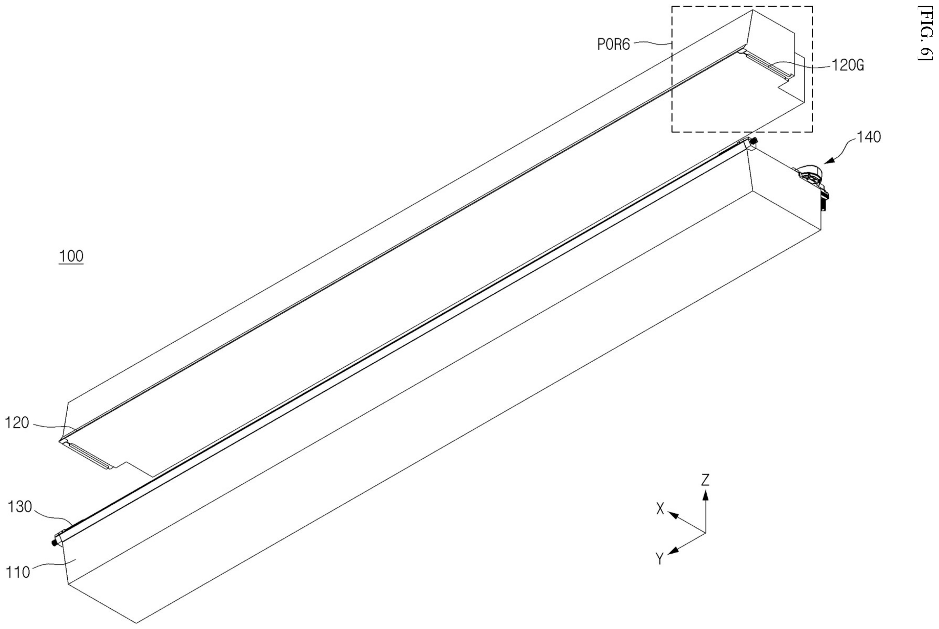

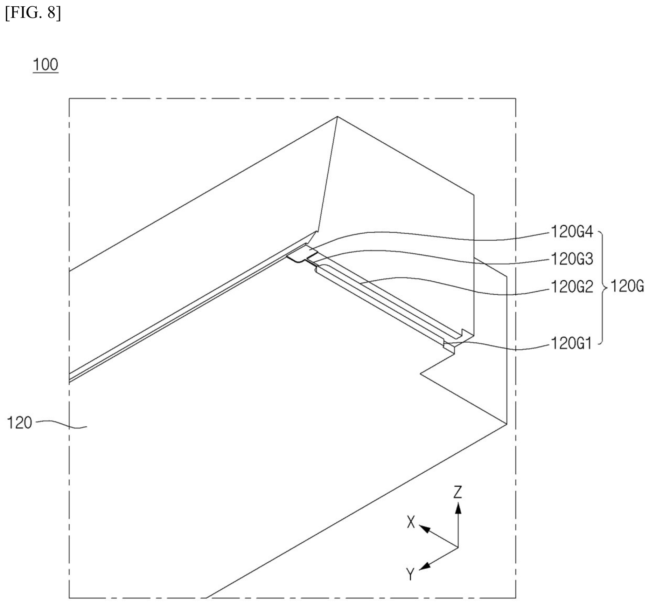

FIG. 8 shows a portion POR6 of FIG. 6.

Referring to FIGS. 2 through 8, the die coater 100 may include a first die 110, a second die 120, a shim 130, and a plurality of coating gap measuring devices 140.

The first die 110 may include a manifold 111 and an electrode slurry supply line connected to the manifold 111. The electrode slurry may flow into the manifold 111 through the electrode slurry supply line. The manifold 111 may be a void space configured to accommodate the electrode slurry. After the electrode slurry fills the manifold 111, the electrode slurry may be discharged outside the die coater 100. The electrode slurry may be discharged externally from the manifold 111 through one or more slits defined by the first die 110, the second die 120, and the shim 130.

The number of slits defined by the first die 110, the second die 120, and the shim 130 may be determined by the number of coated part lanes formed simultaneously by the die coater. For example, when the die coater 100 forms a single coated part lane on a current collector (SB, see FIG. 1), the first die 110, second die 120, and shim 130 may define a single slit. In another example, when the die coater 100 simultaneously forms two coated part lanes on a current collector (SB, see FIG. 1), the first die 110, second die 120, and shim 130 can define two slits.

The manifold 111 may have a well configuration with a predetermined depth from the land part 113. The manifold 111 may include an inclined surface, thereby enabling stable discharge of the electrode slurry from the die coater 100.

The first die 110 may include plurality of grooves 110G. The plurality of grooves 110G may be spaced apart from each other in the Y direction. Coating gap measuring devices 140 may overlap the grooves 110G in the Z direction. The coating gap measuring devices 140 may be at least partially inserted into the grooves 110G. The stem 141ST and spindle 141SP of each coating gap measuring device 140 may be partially inserted into a corresponding one of the grooves 110G. The tip 141T and tip cover 147 of each coating gap measuring devices 140 may also be inserted into a corresponding one of the grooves 110G.

The grooves 110G of the first die 110 may have substantially the same shape as the second to fourth portions 120G2, 120G3, 120G4 of the grooves 120G of the second die 120 described later, but are not limited thereto.

The shim 130 may be interposed between the first die 110 and the second die 120. The first die 110 may contact the lower surface of the shim 130. The second die 120 may contact the upper surface of the shim 130. The upper surface and lower surface of the shim 130 may be opposite.

The shim 130 may generally have a plate shape. The shim 130 may be substantially parallel to both the X direction and the Y direction, and substantially perpendicular to the Z direction. The shim 130 may include a base 130B and wings 130W.

The base 130B may extend in the Y direction. The base 130B may be a plate having a width in the X direction that is smaller than its length in the Y direction. Here, the X direction is the direction in which the electrode slurry is discharged, and the Y direction may be substantially perpendicular to the X direction. Wings 130W may be connected to the base 130B. The wings 130W may protrude in the X direction from the Y-direction ends of the base 130B. The base 130B may be connected to each wing 130W and may further include gates protruding in the Y direction from the wings 130W.

Coating gap measuring devices 140 may be coupled to the first die 110. The coating gap measuring devices 140 may be fixed to the first die 110. The coating gap measuring devices 140 may be spaced apart from each other with the shim 130 in between.

The coating gap measuring devices 140 may be substantially identical to each other. The coating gap measuring devices 140 may be arranged symmetrically. Each coating gap measuring devices 140 may include a gauge 141, an adjuster 143, a clamp 145, a tip cover 147, and a cover adjuster 149. In exemplary embodiments, the coating gap measuring devices 140 may each include a dial gauge.

The gauge 141 may include a bezel 141B, stem 141ST, spindle 141SP, tip 141T, display 141D, and operation buttons 141C. The gauge 141 may also be referred to as an amplitude gauge. The coating gap (CG, see FIG. 1) measured by the gauge 141 may be displayed by the display 141D. Here, the display 141D may include, in addition to an electronic display, an analog display device including a scale and a needle. The gauge 141 may be connected to a controller and/or processor via a wired or wireless communication channel. Accordingly, machine control (i.e., movement and alignment of the die coater 100) to ensure that the coating gap (CG, see FIG. 1) measured by the gauge 141 remains within the target range may be performed.

The bezel 141B may be configured to protect internal elements such as the circuitry of the gauge 141. Each element of the gauge 141 may be assembled around the bezel 141B. For example, a capacitive absolute encoder may be embedded within the bezel 141B, but this is not limited thereto. Analog components for detecting displacement, such as a dial, may also be embedded within the bezel 141B.

The spindle 141SP may extend in the X direction. The longitudinal direction of the spindle 141SP may be the X direction. The spindle 141SP is the part that contacts the measurement target to detect its position. The spindle 141SP may have a roughly rod-like shape. The position of the spindle 141SP, determined based on the position on the surface of the measurement target, may be transmitted to an encoder and/or dial. The end part (i.e., the contact part) of the spindle 141SP may be one of a shell type having a rounded end shape, a flat type having a flat end shape, and a needle type having a pointed end shape.

The tip 141T may extend in the X direction. The longitudinal direction of the tip 141T may be the X direction. The tip 141T may be coupled to the end of the spindle 141SP in the extending direction (i.e., the X direction). The tip 141T may be a contact part additionally provided on the spindle 141SP of the gauge 141. Accordingly, the tip 141T may be spaced apart from the bezel 141B with the spindle 141SP in between. The width (or diameter) of the tip 141T may differ from the width (or diameter) of the spindle 141SP. The width (or diameter) of the tip 141T may be smaller than the width (or diameter) of the spindle 141SP. The width (or diameter) of the tip 141T may be greater than the thickness of the shim 130, but is not limited thereto. The width (or diameter) of the tip 141T may also be smaller than the thickness of the shim 130. The width (or diameter) of the tip 141T may be equal to the thickness of the shim 130.

The stem 141ST may extend in the X direction. The longitudinal direction of the stem 141ST may be the X direction. The stem 141ST may connect the bezel 141B and the spindle 141SP. The stem 141ST may have a generally rod-like shape. The stem 141ST may be interposed between the bezel 141B and the spindle 141SP. The width (or diameter) of the stem 141ST may be greater than the width (or diameter) of the spindle 141SP, but is not limited thereto. The width (or diameter) of the stem 141ST may also be the same as the width (or diameter) of the spindle 141SP. Furthermore, the stem 141ST and the spindle 141SP may be integrated into a single element.

The operation buttons 141C may be used to turn the gauge 141 on/off and adjust the zero point.

The adjuster 143 may be configured to adjust the gauge 141. The adjuster 143 may be configured to adjust the gauge 141 to be in alignment mode or coating mode. The adjuster 143 may include, but is not limited to, a lever, a handle, and a dial.

In alignment mode, the tip 141T of the gauge 141 can advance, and accordingly, the tip 141T of the gauge 141 can protrude in the X direction relative to the lip (100L, see FIG. 1). In alignment mode, the tip 141T of the gauge 141 can protrude in the X direction relative to the first die 110, second die 120, and shim 130, and accordingly, the tip 141T of the gauge 141 can contact the coating roll (200, see FIG. 1) to measure the coating gap (CG, see FIG. 1).

In coating mode, the tip of the gauge 141 may be retracted, whereby the tip 141T of the gauge 141 may not protrude relative to the lip (100L, see FIG. 1). In alignment mode, the tip 141T of the gauge 141 may be positioned away from the coating roll (200, see FIG. 1), thereby preventing damage to the current collector (SB, see FIG. 1) by the tip 141T and interference with the coating process.

The clamp 145 may be coupled to the first die 110 by methods such as bolting. The clamp 145 may be configured to fix the gauge 141. The clamp 145 may be coupled to the stem 141ST of the gauge 141, but is not limited thereto. For example, the clamp 145 may be coupled to the spindle 141SP of the gauge 141 or to the bezel 141B of the gauge 141. The clamp 145 may include a groove 145G into which a portion of the gauge 141, such as the stem 141ST, is inserted. The clamp 145 of each coating gap measuring devices 140 may overlap the shim 130 in the X direction.

The tip cover 147 may overlap the stem 141ST, spindle 141SP, and tip 141T in the X direction. The tip cover 147 may include a hole 147H. The tip cover 147 may allow or prevent the tip 141T from protruding outside the die coater 100. In alignment mode, the tip 141T may align with the hole 147H in the X direction, thereby enabling the tip 141T to advance toward the coating roll (200, see FIG. 1). In coating mode, the hole 147H may not be aligned with the tip 141T, and the tip cover 147 may prevent the tip 141T from protruding outside the die coater 100.

The cover adjuster 149 may be configured to adjust the position of the tip cover 147. By operating the cover adjuster 149, the hole 147H in the tip cover 147 and the tip 141T may be aligned to allow the tip 141T to protrude outside the die coater 100. By operating the cover adjuster 149, the hole 147H and the tip 141T can be spaced apart in the Y direction to allow the tip cover 147 to prevent the tip 141T from protruding outward. The cover adjuster 149 may include, but is not limited to, a lever, a handle, and a dial.

The second die 120 may include a plurality of grooves 120G. The plurality of grooves 120G may be spaced apart from each other in the Y direction. The coating gap measuring devices 140 may overlap the grooves 120G in the Z direction. The coating gap measuring devices 140 may be at least partially inserted into the grooves 120G.

According to exemplary embodiments, the width (or diameter) of the spindle 141SP and stem 141ST may differ from the thickness of the shim 130. According to exemplary embodiments, the width (or diameter) of the spindle 141SP and stem 141ST may be greater than the thickness of the shim 130.

Each groove 120G may include a first portion 120G1, a second portion 120G2, a third portion 120G3, and a fourth portion 120G4. The first portion 120G1 may be connected to the second portion 120G2, the second portion 120G2 may be connected to the third portion 120G3, and the third portion 120G3 may be connected to the fourth portion 120G4.

The first portion 120G1 can be overlapped with a clamp 145 in the Z direction. The clamp 145 can be inserted into the first portion 120G1. The second portion 120G2 can be overlapped with a spindle 141SP in the Z direction. The spindle 141SP can be inserted into the second portion 120G2. The third portion 120G3 can be overlapped with the tip 141T in the Z direction. The tip 141T can be inserted into the third portion 120G3. The fourth portion 120G4 can be overlapped with the tip cover 147 in the Z direction. The tip cover 147 can be inserted into the fourth portion 120G4.

According to exemplary embodiments, each groove 120G may have a variable width in the Y direction. The Y-direction width of the first portion 120G1 of each groove 120G may differ from the Y-direction width of the second portion 120G2 of each groove 120G. The width of the first portion 120G1 of each groove 120G may be greater than the Y-direction width of the second portion 120G2 of each groove 120G.

The Y-direction width of the second portion 120G2 of each groove 120G may differ from the Y-direction width of the third portion 120G3 of each groove 120G. The width of the second portion 120G2 of each groove 120G may be greater than the Y-direction width of the third portion 120G3 of each groove 120G.

The Y-direction width of the third portion 120G3 of each groove 120G may differ from the Y-direction width of the fourth portion 120G4 of each groove 120G. The width of the third portion 120G3 of each groove 120G may be smaller than the Y-direction width of the fourth portion 120G4 of each groove 120G.

According to exemplary embodiments, the clamp 145, spindle 141SP, tip 141T, and tip cover 141T may overlap the second die 120 in the Z direction. According to exemplary embodiments, the display 141D may not overlap the second die 120 in the Z direction. According to exemplary embodiments, the display 141D may be spaced apart from the second die 120 in the Y direction. According to exemplary embodiments, the display 141D may also be spaced apart from the second die 120 in the X direction.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A die coater comprising:
a first die comprising a manifold;
a shim on the first die;
a plurality of coating gap measuring devices coupled to the first die; and
a second die coupled to the first die,
wherein each of the plurality of coating gap measuring devices is configured to measure a distance from a lip, which is a slurry discharge part of the first die, the shim, and the second die, to a coating roll.

2. The die coater of claim 1, wherein
the plurality of coating gap measuring devices are spaced apart from each other with the shim interposed between them.

3. The die coater of claim 1, wherein
each of the plurality of coating gap measuring devices comprises a dial gauge, and
the dial gauge comprises a bezel and a rod-shaped spindle connected to the bezel.

4. The die coater of claim 3, wherein
a thickness of the shim is smaller than a thickness of the spindle.

5. The die coater of claim 3, wherein
the first die coater comprises a groove into which the spindle is inserted.

6. The die coater of claim 3, wherein
each of the plurality of coating gap measuring devices comprises a clamp for fixing the dial gauge to the first die.

7. The die coater of claim 6, wherein
the clamp is fixed to the first die, wherein
the clamp comprises a groove, wherein
a stem of the dial gauge is inserted into the groove, and
the stem is interposed between the bezel and the spindle.

8. The die coater of claim 6, wherein
the shim overlaps the clamp of each of the plurality of coating gap measuring devices in the extending direction of the spindle.

9. The die coater of claim 3, wherein
each of the plurality of coating gap measuring devices further comprises a tip connected to the spindle.

10. The die coater of claim 9, wherein
a width of the tip is different from a width of the spindle.

11. The die coater of claim 9, wherein
a width of the tip is smaller than a width of the spindle.

12. The die coater of claim 9, wherein
a width of the tip is greater than a thickness of the shim.

13. The die coater of claim 9, wherein
each of the plurality of coating gap measuring devices comprises a tip cover overlapping the tip in a first direction, which is the extending direction of the tip.

14. The die coater of claim 13, wherein
the tip cover comprises a hole extending in the first direction.

15. The die coater of claim 14, wherein
each of the plurality of coating gap measuring devices further comprises a cover adjuster configured to adjust the position of the hole in the tip cover.

16. The die coater of claim 13, wherein
the second die comprises a plurality of grooves overlapping with the plurality of coating gap measuring devices.

17. The die coater of claim 16, wherein
each of the plurality of coating gap measuring devices comprises a clamp for fixing a dial gauge to the first die, and
each of the plurality of grooves comprises a first portion overlapping the clamp.

18. The die coater of claim 16, wherein
each of the plurality of grooves comprises a second portion overlapping the spindle.

19. The die coater of claim 16, wherein
each of the plurality of grooves comprises a third portion overlapping the tip.

20. The die coater of claim 16, wherein
each of the plurality of grooves further comprises a fourth portion overlapping the tip cover.
